# EUROPEAN PATENT APPLICATION

(11) **EP 4 534 188 A1**
(43) Date of publication of application: **09.04.2025**
(21) Application number: 23202074.3
(22) Date of filing: 06.10.2023
(51) Int. Cl.: B01F 23/30, B01F 27/114, B01F 27/724, B01D 53/62

(54) **SCREW REACTOR FOR CARBON SEQUESTRATION**

(71) Applicant: Carbon Upcycling Technologies Inc., Calgary, AB T2P 3N9 (CA)
(72) Inventor: The designation of the inventor has not yet been filed
(74) Representative: Nederlandsch Octrooibureau

(57) **Abstract**

The present invention relates to a screw conveyor suitable for continuous carbon sequestration in solid feedstocks. The screw conveyor comprises a screw having a helical flighting (101), agitation means (103) protruding from the helical surface of the flighting and one or more gas flow passages (102) radially positioned between the longitudinal axis and the outer radius of the screw.

## Description

### Field of the invention

The present invention relates to a screw conveyor for conveying agglomerated feedstock. It is further object of the present invention to provide a method for sequestering carbon dioxide into solid feedstocks which is energy efficient and can preferably be operated as a continuous process.

### Background art

Anthropogenic emissions have increased carbon dioxide concentrations in the atmosphere to at least 30% more than Pre-Industrial Era levels. Moreover, it is estimated that future global carbon dioxide emissions will increase from about 7.4 GcC (billions of tons of atmospheric carbon) per year, which was the level in 1997, to 26 GtC per year by 2100. The adverse environmental impact linked with increased carbon dioxide emissions has resulted in more stringent environmental standards regarding emissions of pollutants into the atmosphere.

The management of carbon dioxide emissions can be achieved by: increasing the efficiency of energy conversion, using low-carbon or carbon-free energy sources, as well as the capture and sequestration of carbon dioxide emissions. The sequestration of carbon dioxide, remains the preferred method for tackling antecedent carbon dioxide emissions.

Mineral carbonation is a sequestration process in which minerals, such as olivine and serpentine, or calcium-rich minerals, react with carbon dioxide to form geologically stable mineral carbonates. These processes mimic the naturally occurring weathering of rocks.

The mineral carbonation approach has several inherent advantages, including a vast natural abundance of raw materials and the permanent and benign storage of CO₂ in solid form. The primary drawback to mineral carbonation has been the reaction kinetics, because these naturally occurring processes happen slowly over geological timeframes instead of industrial time scales. Previous studies have suspended minerals in aqueous carriers, because such systems have been shown to have faster kinetics than direct carbonation. The mineral aqueous mineral carbonation step involves the leaching of magnesium, calcium or another suitable metal or combination of metals and the subsequent reaction with dissolved hydrogen carbonate. A disadvantage of aqueous methods is that the resulting aqueous product or slurry needs to be used on-site to avoid expensive and energy-inefficient transportation or evaporation.

Sequestration employing solids has been achieved by crushing magnesium-rich minerals to a fine particle size to promote surface reactions that are known to control most mineral dissolution reactions. Such processes have been hampered by extensive comminution of the raw materials, high partial pressures and long reaction times, all of which render the process energy intensive. Other studies have also reported that preheating the serpentine minerals to about 650 °C and above 50 bars of pressure significantly increases their carbonation reactivity, probably due to dehydroxylation, increase in the surface area and destabilization of the crystal structure. However, this pre-treatment is very energy intensive, requiring more than 200 kWh/ton of serpentine.

Hence, there remains a need to develop a streamlined, low-temperature and energy-efficient process which can capture carbon dioxide into CO₂-related functional groups across a wide variety of raw materials and which is performed on economically viable timeframes.

A screw conveyor is a mechanism that uses a rotating helical screw blade to move liquid or granular materials. Different types of screw conveyors exist such as screw conveyors which transport material such as fresh concrete in the precast concrete industry or grain in the agriculture industry. Screw conveyors have also found applications as reactors such as in the pyrolysis of biomass wherein the biomass conveyed through the screw conveyor is heated by a heating jacket in the absence of oxygen.

US2008277319A1 discloses a method for the sequestration and transformation of carbon dioxide generated by anthropogenic sources. The method comprises the steps of size-selecting mineral particles and combining it with water to form a slurry which is then reacted with carbon dioxide.

US6543709B2 discloses a gravity flow air classifying mill. The mill comprises a particle return manifold for returning oversized particles to the mill house.

WO2021087606A1 discloses ball milling methods for mechanochemical CO₂ sequestration in mineral feedstocks.

It is an object of the present invention to provide a screw conveyor for conveying agglomerated feedstock.

It is further object of the present invention to provide a method for sequestering carbon dioxide into solid feedstocks which is energy efficient and can preferably be operated as a continuous process.

It is a further object of the present invention to provide an apparatus suitable for the sequestration of carbon dioxide into solid feedstocks.

### Summary of the Invention

The present inventors have found that conveying and simultaneously carbonating solid material can be achieved in a highly efficient manner for a large variety of feedstocks when utilising a screw conveyor comprising agitation means protruding from the helical surface of the flighting. The screw conveyor can comprise one or more gas flow passages radially positioned between the longitudinal axis and the outer radius of the screw. The flow passages allow improved gas-solid interactions with the conveyed material, and contact between the agitation means and feedstock prevents agglomeration, promoting efficient and controlled material flow along the conveyor. By preventing agglomeration of the material stream during conveying through the screw reactor enables a large surface area for gas-solid interactions, in particular for forming CO₂-enriched materials, typically through carbonation of the feedstock. The concomitant prevention of agglomeration and carbonation can thus be achieved in a low-energy manner and can optionally be coupled with upstream or downstream processes to obtain consistent results, throughput and CO₂ sequestration performance, thereby greatly enhancing process reliability and efficiency. Additionally, it was found that the method can conveniently be coupled to existing flue gas streams, such as fossil fuel flue gas combustion streams or cement kiln flue gas, allowing point-source emissions to be captured without capital- and energy-intensive stand-alone capture processes. The method results not only in a reduction of CO₂ concentration but also in SOₓ and/or NOₓ reduction, thereby providing further environmental benefits. An additional advantage is that a broad range of gas flow rates can be accommodated, while an alternative reactor such as a fluidized bed reactor is limited in its range of operation to fluidization velocities of the solid being treated.

In a first aspect, the present invention provides a screw conveyor for conveying feedstock, comprising a hollow housing and a screw positioned within said housing, wherein the screw is supported for rotational movement around a longitudinal axis, wherein the screw comprises a helical flighting, characterised in that the screw comprises agitation means protruding from the helical surface of the helical flighting and one or more gas flow passages radially positioned between the longitudinal axis and the outer radius of the screw.

In preferred embodiments of the invention, there is provided a screw conveyor wherein the agitation means comprises one or more lifting bars connecting two adjacent blades of the helical flighting.

In preferred embodiments of the invention, the helical flighting is attached to the outer surface of a screw shaft extending along the helical flighting and the one or more gas flow passages are formed by one or more openings extending through a blade of the helical flighting.

In another aspect, the invention provides a carbon sequestration facility, suitable for the sequestration of carbon in a solid feedstock thereby producing solid COz-enriched material, said carbon sequestration facility comprising at least one screw conveyor as described herein.

A process for the preparation of CO₂-enriched material comprising the steps of:
i) providing a solid feedstock;
ii) providing a carbon-rich gas comprising at least 0.5 vol% CO₂;
iii) feeding the solid feedstock to a screw conveyor as described herein, preferably via a substantially airtight solid feedstock inlet;
iv) feeding the carbon-rich gas to the screw conveyor, preferably via a gas inlet distinct from the solid feedstock inlet;
v) contacting the solid feedstock with the carbon-rich gas in the screw conveyor, preferably comprising rotating the screw, thereby obtaining CO₂-enriched material.

In another aspect of the invention there is provided the use of the screw conveyor or of the carbon sequestration facility described herein for the CO₂-enrichment of a solid feedstock. In another aspect of the invention there is provided the use of the screw conveyor or of the carbon sequestration facility described herein for carbon sequestration. In another aspect of the invention there is provided the use of the screw conveyor or of the carbon sequestration facility described herein for the removal of CO₂ from a carbon-rich gas, such as a flue gas as described herein. Preferably the uses described herein comprise contacting a solid feedstock as described herein with a carbon-rich gas as described herein inside a screw conveyor as described herein.

### Brief description of the figures

The present invention will now be described in more detail with reference to specific embodiments of the invention, given only by way of illustration, and with reference to the accompanying drawings.

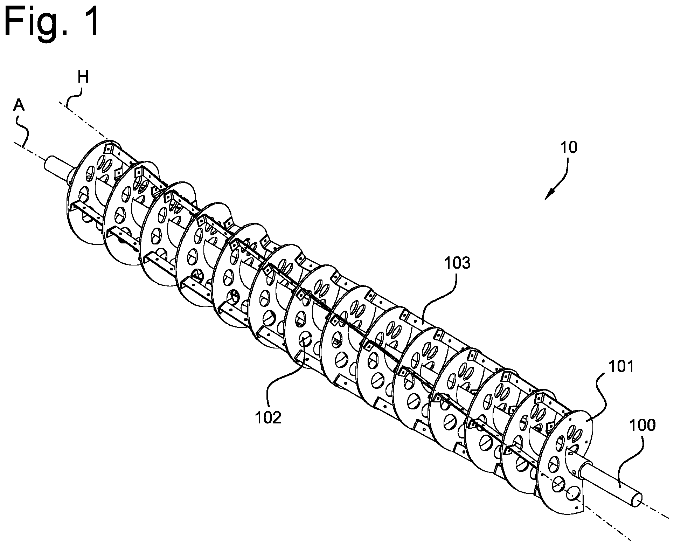

Figures 1-3 show a screw 10 for conveying solid material along a longitudinal axis A of a hollow housing of a screw conveyor (not shown). The screw 10 comprises a longitudinal shaft 100 extending along the longitudinal axis A and a helical flighting 101 mounted to the longitudinal shaft 100. The longitudinal shaft 100 is supported at each end by respective bearings (not shown) and may be rotated using any method known in the art.

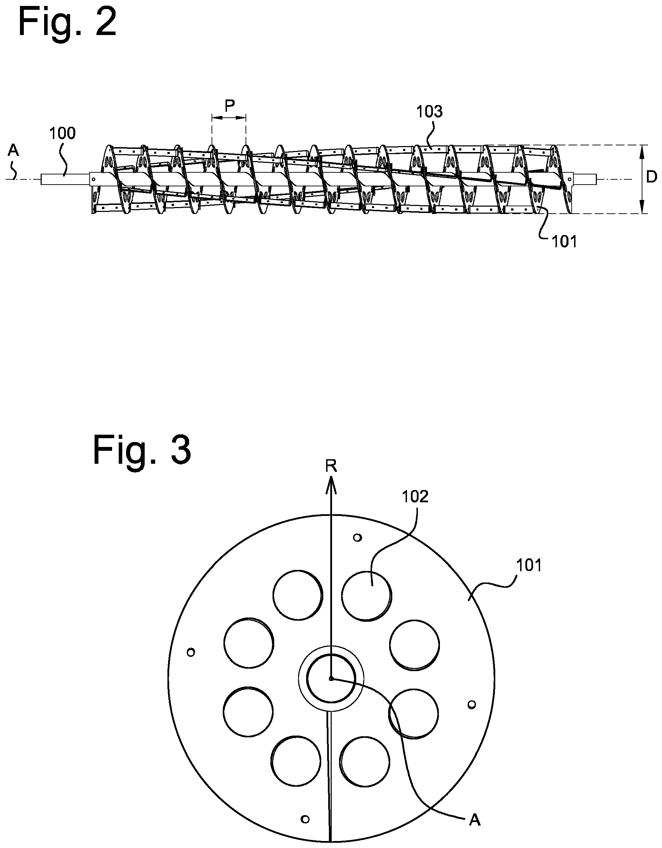

Figure 1 shows in a perspective view a screw of a screw conveyor according to an embodiment of the invention. The helical flighting 101 is formed by a series of blades, each blade being defined as a section of the helical flighting related to one complete helix turn (as shown in figure 3). The helical flighting may be made from one continuous metal sheet wound into multiple blades, or may be made from distinct blades or parts of blades which are joined e.g. by welding. Furthermore, the helical flighting 101 comprises at least one blade having a plurality of openings 102 extending through the blade. The plurality of openings 102 may be arranged symmetrically around the longitudinal axis A, preferably the plurality of openings 102 are provide at the same radial distance in the radial direction R from the longitudinal axis A. As shown in figure 3, the plurality of openings 102 may be identical. The screw 10 further comprises agitation means formed by a plurality of agitation elements 103 extending between the blades of the helical flighting 101 to substantially form a single, double or triple agitation helix H or a part thereof. Preferably the pitch of the agitation helix H is at least ten times the pitch of the helical flighting 101.
Figure 2 shows a side view of the screw shown in Figure 1.
Figure 3 shows a front view of the screw shown in Figure 1.

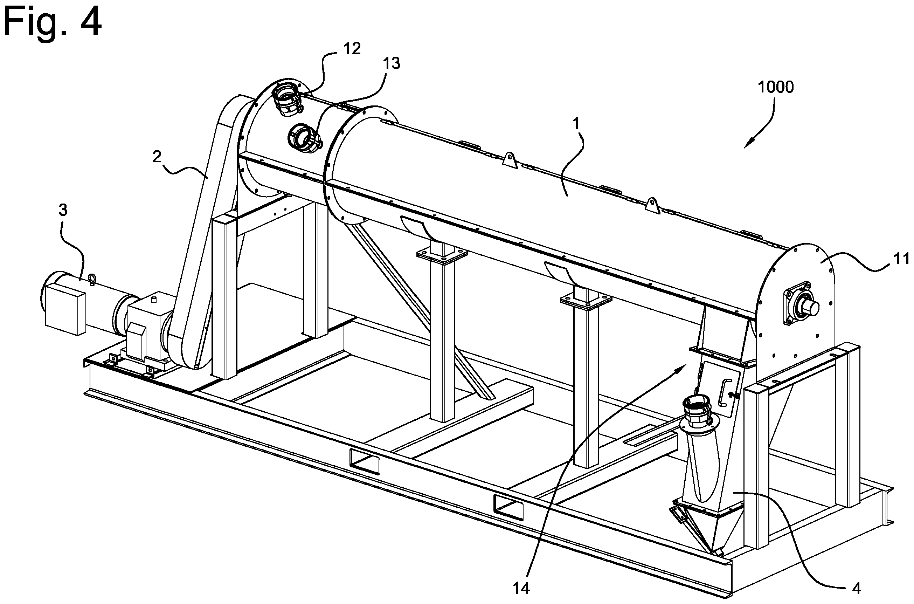

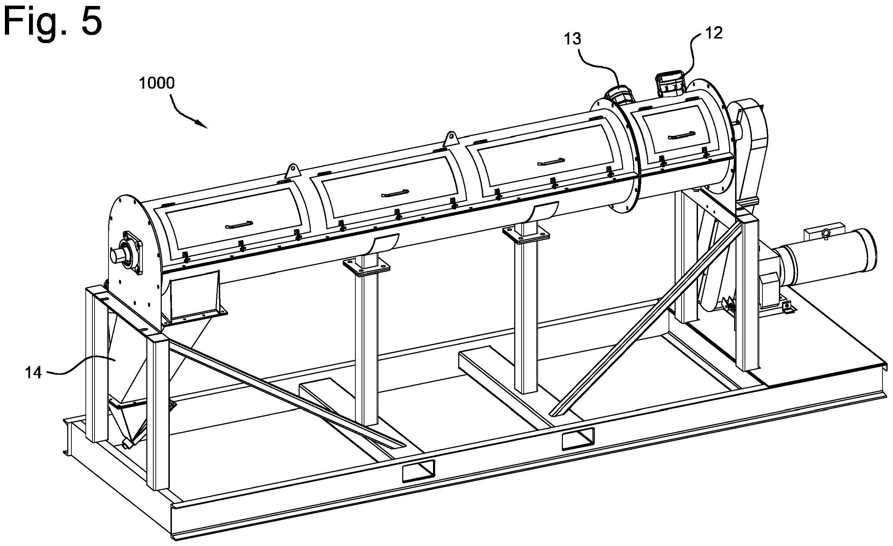

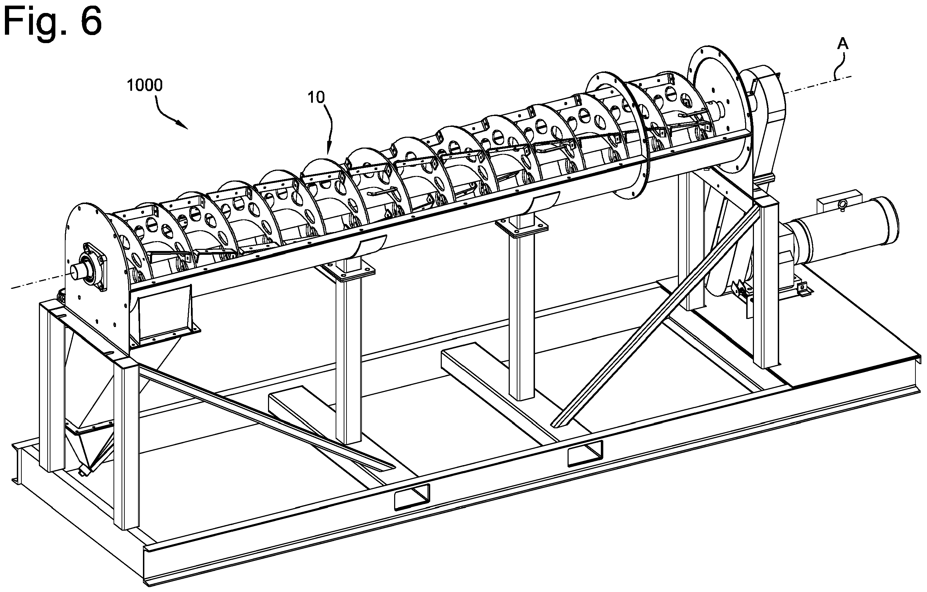

Figures 4-6 show a screw conveyor 1000 for the preparation of CO₂-enriched material. The screw conveyor 1000 has a hollow housing 1, 11 and a screw 10 as shown in figures 1-3 mounted in the hollow housing 1, 11. The screw 10 is supported at each end by respective bearings (not shown) and may be rotated using a drive unit 2 connected to one end of the screw, imparting rotational movement to facilitate material transport. A motor 3 is connected to the drive unit, providing the necessary power for the rotational movement of the screw shaft. A variable speed control mechanism may be integrated into the motor for adjusting the rotational speed to control the conveying rate (not shown).
Figure 4 shows in a perspective view a screw conveyor according to an embodiment of the invention. The screw conveyor 1 further comprises a gas inlet 12 forming a first passage through the wall of the housing 1, 11, a solid material inlet 13 forming a second passage through the wall of the housing 11 and a solid material outlet 14 forming a third passage through the wall of the housing 1, 11. Notwithstanding the in- and outlets, the housing 1, 11 is configured to be substantially airtight. The screw conveyor 1000 may further a material chute 4, wherein the material chute 4 is connected to the material outlet 14 such that solid material can be removed from the reactor through solid material outlet 14. The screw conveyor 1 is configured to convey solid feedstock from the solid material inlet 13 to the solid material outlet 14 while the gas comprising at least 0.5 vol% CO₂ is present in, preferably flowing through the hollow housing 1, 11.
Figure 5 shows a side view of the screw conveyor shown in Figure 4.
Figure 6 shows a front view of the screw conveyor shown in Figure 4 wherein part of housing was omitted to expose the screw positioned inside the reactor.

### Description of embodiments

The expression "comprise" and variations thereof, such as, "comprises" and "comprising" as used herein should be construed in an open, inclusive sense, meaning that the embodiment described includes the recited features, but that it does not exclude the presence of other features, as long as they do not render the embodiment unworkable.

The expressions "one embodiment", "a particular embodiment", "an embodiment" etc. as used herein should be construed to mean that a particular feature, structure or characteristic described in connection with the embodiment is included in at least one embodiment. Thus, the appearances of such expressions in various places throughout this specification do not necessarily all refer to the same embodiment. Furthermore, the particular features, structures, or characteristics may be combined in any suitable manner in one or more embodiments. For example, certain features of the disclosure which are described herein in the context of separate embodiments are also explicitly envisaged in combination in a single embodiment.

The singular forms "a," "an," and "the" as used herein should be construed to include plural referents unless the content clearly dictates otherwise. It should also be noted that the term "or" is generally employed in its broadest sense, that is as meaning "and/or" unless the content clearly dictates otherwise.

Whenever reference is made throughout this document to a compound which is a salt, this should be construed to include the anhydrous form as well as any solvates (in particular hydrates) of this compound, unless explicitly defined otherwise.

As used herein, the expression "wt.%" when used in the context of an ionic compound refers to the amount of the compound inclusive of its counterion(s).

The term "CO₂-enriched material" is used herein to refer to the solid feedstock after being contacted with the carbon-rich gas in step (v). Depending on the feedstock, the physical and/or chemical mechanism underlying the CO₂ sequestration may be different. For example, in case the feedstock comprises a mineral the CO₂ will typically be converted to carbonates (also referred to as carbonation). In case the feedstock comprises elemental carbon, (such as graphite), the CO₂ will typically be bonded to the carbon in the form of various functional groups including carboxylates, epoxides, carbonyl groups, etc.

In accordance with the invention, the BET surface area as referred to herein is determined at a temperature of 77K using a sample mass of 0.1-0.5g. The BET surface area as referred to herein is determined using nitrogen. A preferred analysis method to determine the BET surface area comprises heating samples to 400 °C for a desorption cycle prior to surface area analysis. A suitable and thus preferred analysis apparatus for determining the BET surface area is a Micromeritics Gemini VII 2390 Surface Analyzer preferably equipped with a Micromeritics FlowPrep 060 flowing-gas degassing unit.

TGA as used herein refers to Thermogravimetric Analysis, a technique known to the person skilled in the art. A preferred TGA setup to determine the CO₂ content of the feedstocks and carbonated materials in the context of the present invention is a Setaram TAG 16 TGA/DSC dual chamber balance employing a 0.1-2 mg sample. In accordance with the invention, the TGA is performed under an inert atmosphere, such as nitrogen or argon.

In accordance with the invention, unless specified otherwise, the particle size distribution characteristics referred to herein such as D10, D50 and D90 as well as the specific surface area (unless explicitly mentioned to be BET surface area) are determined by measuring with a laser light scattering particle size analyzer utilizing the Mie theory of light scattering, such as the Brookhaven laser particle sizer, Model Microbrook 2000LD or another instrument of equal or better sensitivity and reporting the data using a volume equivalent sphere model. As is known to the skilled person, the D50 is the mass median diameter, i.e. the diameter at which 50% of a sample's mass is comprised of smaller particles. Similarly, the D10 and D90 represent the diameter at which 10 or 90% of a sample's mass is comprised of smaller particles.

The Total Carbon (TC) content referred to herein is preferably determined in accordance with the method described on Soil Sampling and Methods of Analysis, 2nd Ed., CRC Press (2008), p. 244 and further, incorporated herein by reference. The Total Carbon (TC) content is always expressed herein as wt.% based on the total weight of the composition being measured. For example, in case the total carbon content of the solid feedstock is referred to, it is based on the total weight of the solid feedstock, in case the total carbon content of the CO₂ enriched material is referred to, it is based on the total weight of the CO₂-enriched material.

The moisture content of the solid materials referred to herein (e.g. the solid feedstock provided in step (i) of the method, and the wetted CO₂-enriched material obtained in step (iv)) refers to the moisture content determined by oven-drying the material at 150 °C until constant weight and comparing the initial weight with the dry weight.

For the purposes of the present disclosure, ideal gas law is assumed such that the mol% of a gas is considered as equal to the vol%.

In the context of the present invention, reference may be made to the solid material comprised in the screw conveyor during operation as "the solid feedstock". The skilled person will understand that the solid material in the screw conveyor converts from "solid feedstock" to "CO₂-enriched material" as the reaction progresses and that reference to "the solid feedstock" once it has been fed to the screw conveyor in step (iii) should be interpreted as referring to the material inside the screw conveyor regardless of its actual stage of conversion to CO₂-enriched material, unless specified otherwise.

The expressions "downstream" or "upstream" compared to a certain reference point (e.g. a specific screw conveyor) as used herein, denote the facility and/or process downstream or upstream from that reference point as seen with regard to the direction of solid material flow through the facility and/or process. Thus, the expression "downstream" of a certain reference point denotes a position away from that reference point in the same direction of solid material flow.

### Screw Conveyor

In a first aspect, the present invention provides a screw conveyor for conveying feedstock, comprising a hollow housing and a screw positioned within said housing, wherein the screw is supported for rotational movement around a longitudinal axis, wherein the screw comprises a helical flighting, characterised in that the screw comprises agitation means protruding from the helical surface of the flighting and one or more gas flow passages radially positioned between the longitudinal axis and the outer radius of the screw. Multiple screws may be positioned inside the same housing, for example two or three screws may be positioned inside the same housing.

In preferred embodiments, the screw positioned within the housing of the screw conveyor is a shaftless screw or a screw wherein the helical flighting is attached to the outer surface of a screw shaft. A screw which is not a shaftless screw, thus which has the helical flighting attached to the outer surface of a screw shaft is preferred since it offers additional stability and strength. Preferably all of the helical flighting is attached to the outer surface of the screw shaft. In other words, the screw shaft extends along the helical flighting. The helical flighting may be made from one continuous metal sheet wound into multiple blades, or may be made from distinct blades or parts of blades which are joined e.g. by welding.

The screw positioned within the housing of the screw conveyor may be single flighted our double flighted. The pitch of the screw may be constant or variable, preferably constant. In the case of constant pitch, the axial spacing between these points remains uniform along the length of the screw, ensuring consistent material displacement. The screw may have a constant or tapered helical flighting. Preferably the helical flighting is constant. The screw may further comprise paddles mounted on the shaft between the flighting.

The agitation means may be provided in the form of any means capable of providing an agitated bed of material. In combination with the gas flow passages, this provides optimal solid-gas interactions for carbon sequestration, and serves to reduce agglomeration during the carbon sequestration reaction. In embodiments, the agitation means comprise cut and folded flights. The agitation means preferably comprise one or more lifting bars connecting two adjacent blades of the helical flighting. Two adjacent blades of the helical flighting may be connected to each other by two or more lifting bars. In preferred embodiments of the invention, the agitation means comprise one or more lifting bars connecting two adjacent blades of the helical flighting embodiments, and a majority of the blades are connected to one or two, preferably to two, adjacent blades by one or more lifting bars.

The plurality of agitation elements extending between the blades of the helical flighting are preferably positioned such that adjacent agitation elements are positioned at a different radial position. This has the advantage that the load on the screw is distributed because not all the lifting bars will be contacting solid material at the same time. Preferably, a plurality of agitation elements extending between the blades of the helical flighting are positioned such that they form one or more discontinuous or continuous helixes. Preferably, the agitation means comprises a plurality of lifting bars, each lifting bar connecting two adjacent blades of the helical flighting, wherein the plurality of lifting bars forms one or more discontinuous or continuous helixes. Preferably, a double or triple helix is formed by a plurality of agitation elements extending between the blades of the helical flighting, preferably by a plurality of lifting bars, each lifting bar connecting two adjacent blades of the helical flighting.

The present inventors have found that increasing the number of lifting bars between the same blades of the helical flighting is useful to increase the reaction speed for slow-reacting materials, while less bars can be used for fast-reacting materials. Thus, in embodiments of the invention, the agitation means comprises a plurality of lifting bars, each lifting bar connecting two adjacent blades of the helical flighting, wherein a first and second adjacent blade of the helical flighting are connected by two or more, three or more, four or more, five or more, or six or more lifting bars. The skilled person will understand that if such an amount of lifting bars are placed between all adjacent blades of the helical flighting, and they are aligned appropriately, two, three, four, five, six or more helices may be formed by the plurality of lifting bars.

The lifting bars may have a closed structure or comprise one or more openings (such as a perforated structure). The agitation elements are preferably positioned substantially perpendicular to the helical flighting.

In case of a shaftless screw, the one or more gas flow passages may be formed by the empty central area of the shaftless screw which is present because of the absence of a shaft. The one or more gas flow passages may also be formed by one or more openings extending through a blade of the helical flighting. In highly preferred embodiments of the invention the helical flighting of the screw is attached to the outer surface of a screw shaft extending along the helical flighting, and the one or more gas flow passages are formed by one or more openings extending through a blade of the helical flighting. A majority of the blades of the helical flighting may comprise one or more openings extending through the blade, preferably wherein each of the blades of the helical flighting comprises one or more openings extending through the blade. It is preferred that at least 10%, preferably at least 15% of the surface area of the helical flighting forms a gas flow passage. Preferably at most 35% of the surface area of the helical flighting forms a gas flow passage, more preferably at most 25% of the surface area of the helical flighting forms a gas flow passage. The one or more openings may have a surface area of at least 0.5 cm², preferably at least 1 cm². In some embodiments, the one or more openings have a major dimension of at least 0.5 cm, preferably at least 1 cm. In preferred embodiments, the gas flow passage are circular with a diameter of at least 0.5 cm, preferably at least 1 cm.

In order to maximize the impact of the agitation means, and maximize solid-gas interactions, they are preferably positioned at or near the outer radius of the screw. Thus, in preferred embodiments of the invention the agitation means are positioned at a radial distance of at least 50%, preferably at least 60%, more preferably at least 65% of the outer radius of the screw from the longitudinal axis. Preferably, the outer edge of the agitation means is flush with the outer radius of the screw. In order to allow sufficient space for material movement and to limit gas flow obstruction, the agitation means preferably have a maximum height in the radial direction of less than 50% of the outer radius of the screw, preferably of less than 30% of the outer radius of the screw. Similarly, the helical flighting may be free of agitation means at radial positions of 0-30% of the outer radius of the screw, preferably at radial positions of 0-50% of the outer radius of the screw. The one or more gas flow passages are radially positioned between the longitudinal axis and the agitation means. As will be understood by the person skilled in the art, if the agitation means are disposed towards the outer radius of the screw, there is greater contact with the feedstock thereby facilitating the prevention of agglomeration. These embodiments are particularly preferred when the agitation means comprises one or more lifting bars as described herein earlier. Highly preferably, the one or more gas flow passages are radially positioned between the longitudinal axis and the agitation means.

The screw is preferably comprised in the housing in a substantially horizontal orientation, such that the screw conveyor is a horizontal screw conveyor.

The screw conveyor is preferably configured to rotate the screw at no more than 350 rpm, preferably no more than 300 rpm. The screw conveyor is preferably configured to rotate the screw at a tip speed within the range of 0.1-0.3 m/s, preferably within the range of 0.4-0.2 m/s.

The housing of the screw conveyor is preferably substantially airtight.

In preferred embodiments, the screw conveyor further comprises:
- a solid feedstock inlet for the introduction of solid feedstock to be conveyed into said housing;
- a solid material outlet for the discharge of conveyed material from the housing; and
- a gas inlet.

The solid feedstock inlet and the solid material outlet are preferably positioned at opposite ends of the housing. The screw conveyor is preferably configured to convey solid material from the solid feedstock inlet of the screw-conveyor to the solid material outlet of the screw conveyor.

The solid feedstock inlet and the gas inlet may be the same inlet, or may be distinct inlets. The solid feedstock inlet is preferably a substantially airtight solid feedstock inlet, such as a rotary valve, a trickle valve, butterfly valve, check valve, gate valve, globe valve, ball valve, preferably a rotary valve, or a trickle valve, highly preferably a rotary valve. The airtight solid feedstock inlet enables continuous feeding of the solid feedstock to the sequestration process with minimal air entrainment. Minimal air entrainment in the screw conveyor enables consistent product output, optimal carbonation kinetics, and CO₂ sequestration performance thereby greatly enhancing process reliability and performance. If an airtight solid feedstock inlet is used, the screw conveyor comprises at least one gas inlet distinct from the solid feedstock inlet. By employing an airtight solid feedstock inlet continuous feeding of the solid feedstock to the screw conveyor is enabled with minimal air entrainment such that optimal, continuous operation of the screw conveyor can be achieved. Using a substantially air-tight solid feedstock inlet also allows the solid feedstock to be stored under a regular air atmosphere until it is fed to the reactor, for example simply using a hopper coupled to the reactor. This allows workers to easily supply additional solid feedstock (e.g. by filling the hopper) without risk of exposure to the carbon-rich gas. Alternatively, the solid feedstock inlet and gas inlet may be the same inlet, which can be advantageous in case the solid feedstock is small enough for the particles to be entrained in the gas stream. The screw conveyor also preferably has at least one solid material outlet suitable for removing solid material from the screw conveyor. Said outlet is typically placed at the opposite side as the solid feedstock inlet. Said at least one outlet is distinct from the solid feedstock inlet and the gas inlet and should be suitable for removing solid material from the second apparatus.. Preferably the screw conveyor comprises at least one solid material outlet which is substantially air-tight, for example using a valve as is described herein elsewhere for the solid feedstock inlet. In this case, a distinct gas outlet forming a passage through the wall of the airtight housing is preferred to allow the screw conveyor to operate under an induced flow of gas as described herein elsewhere. Such setups are advantageous because by separating the solids outlet from the gas outlet they allow control over the gas composition in further stages of the process, for example if the solid material is exposed to another carbon sequestration step or a drying step wherein a gas having a different temperature, humidity and/or CO₂ content is used. Alternatively, a solid material outlet may be provided which performs a dual function of solid material outlet and gas outlet, such that the CO₂-enriched material and the (depleted) carbon-rich gas are removed from the screw conveyor through the same outlet and later separated. In such a case, the solid feedstock and gas outlet may simply be an opening in the housing at a position where CO₂-enriched material can fall out of the screw conveyor under the influence of gravity, through the opening into a container or into a further carbon sequestration apparatus or a dryer placed in series with the screw conveyor. The (depleted) carbon-rich gas may then be amongst others used in the further carbon sequestration apparatus, recirculated to the screw conveyor it was recovered from or removed from the process, such as by venting to the atmosphere after an optional dedusting step. If the container is reversibly closable or disconnectable from the screw conveyor, for example using a closable flow regulator, the container can be periodically emptied while the screw conveyor can stay in continuous operation.

The screw conveyor may further comprise a drive unit connected to one end of the screw, configured to impart rotational movement to the screw; and a motor coupled to said drive unit for providing the necessary power for the rotational movement of the screw.

In preferred embodiments of the invention, the screw conveyors is configured to agitate solid material without causing significant size-reduction.

### A carbon sequestration facility for the sequestration of carbon and the production of CO₂-enriched material

In another aspect, the invention provides a carbon sequestration facility, suitable for the sequestration of carbon in a solid feedstock thereby producing solid COz-enriched material, said carbon sequestration facility comprising at least one screw conveyor as described herein. The carbon sequestration facility is preferably configured for performing a method as described herein.

The carbon sequestration facility preferably further comprises means for providing an induced gas flow (such as a fan or compressor) fluidly connected to the gas inlet of at least one of the one or more screw conveyors. Preferably, the carbon sequestration facility comprises an induction fan placed downstream of at least one of the one or more screw conveyors, configured to provide an induced flow of gas through at least one of the one or more screw conveyors.

Various additional processing equipment may be comprised in the carbon sequestration facility, in order to provide a fully integrated process capable of carbonating various incoming material streams. Some non-limiting embodiments are described here.

The carbon sequestration facility of the present invention may further comprise a size-reduction apparatus placed upstream of the one or more screw conveyors, configured for reducing the size of a solid material before it is fed to the one or more screw conveyors. Such a size-reduction apparatus is preferably configured to subject the solid material to milling or crushing, preferably to ball milling, roller milling, basket milling, hammer milling, rotor-stator milling, pin milling, jet milling and/or rod milling, preferably to roller milling.

The carbon sequestration facility of the present invention may further comprise wetting means configured for wetting solid material. The wetting means may be placed upstream of the one or more screw conveyors, between one or more screw conveyors, or inside one or more screw conveyors.

The carbon sequestration facility of the present invention may comprise a first and a second size-reduction apparatus placed upstream of the one or more screw conveyors, wherein the first size-reduction apparatus is placed upstream of the wetting means and the second size-reduction apparatus, and wherein the wetting means are configured for wetting solid material upstream of the second size-reduction apparatus and/or in the second size-reduction apparatus. Such a facility advantageously allows a first size-reduction and surface activation of solid feedstock, followed by wetting to achieve optimal carbon sequestration performance. However it was found that such wetting may lead to undesirable agglomeration, such that a second size-reduction apparatus which can deagglomerate the solid material during or after wetting is desirable.

The carbon sequestration facility of the present invention may comprise a dryer configured for drying the solid material obtained from the one or more screw conveyors.

The carbon sequestration facility of the present invention may comprise a size-reduction apparatus placed downstream of the one or more screw conveyors, configured for reducing the size of the solid material obtained from the one or more screw conveyors or from the optional dryer. It was found by the present inventors that the carbon sequestration reaction may lead to significant agglomeration, depending on the solid material being carbonated. In this case it can be advantageous to employ a deagglomeration apparatus after the one or more screw conveyors.

The carbon sequestration facility may be adapted to feed solid material from the size-reduction apparatus to the screw conveyor, for example by having conveying means connecting a solid material outlet of a size-reduction apparatus with a solid material inlet of the screw conveyor.

In some embodiments of the invention, the carbon sequestration facility comprises multiple screw conveyors connected in series. In some advantageous setups, the total number of screw reactors connected in series is between 2 to 8, such as 3-7 screw conveyors. In highly preferred embodiments of the invention, the carbon sequestration facility is configured to convey solid material from an outlet of a screw conveyor in the series to an inlet of the next screw conveyor in the series. This can be achieved using various means known to the skilled person, for example solid material collected from a screw conveyor can be deposited on a conveying means. In preferred embodiments, the screw conveyors are stacked such that the outlet of one screw conveyor is vertically substantially aligned with the inlet of the next screw conveyor in the sequence.

In another aspect of the invention there is provided a combustion plant (such as a fossil fuel combustion, wood pellet combustion, biomass combustion or municipal waste combustion plant) or a cement plant comprising a carbon sequestration facility as described herein fluidly coupled to a flue gas outlet of the combustion area of the combustion plant or the calciner of a cement plant. Thus, the combustion plant or cement plant and the reactor are connected such that flue-gas from combustion or calcining can be provided to the sequence of carbon sequestration reactors.

In another aspect of the invention there is provided the use of the screw conveyor or of the carbon sequestration facility described herein for the CO₂-enrichment of a solid feedstock. In another aspect of the invention there is provided the use of the screw conveyor or of the carbon sequestration facility described herein for carbon sequestration. In another aspect of the invention there is provided the use of the screw conveyor or of the carbon sequestration facility described herein for the removal of CO₂ from a carbon-rich gas, such as a flue gas as described herein. Preferably the uses described herein comprise contacting a solid feedstock as described herein with a carbon-rich gas as described herein inside a screw conveyor as described herein.

### Process description

In another aspect of the invention there is provided a process for the preparation of CO₂-enriched material comprising the steps of:
i) providing a solid feedstock;
ii) providing a carbon-rich gas comprising at least 0.5 vol% CO₂;
iii) feeding the solid feedstock to a screw conveyor as described herein, preferably via a substantially airtight solid feedstock inlet;
iv) feeding the carbon-rich gas to the screw conveyor, preferably via a gas inlet distinct from the solid feedstock inlet;
v) contacting the solid feedstock with the carbon-rich gas in the screw conveyor, preferably comprising rotating the screw, thereby obtaining CO₂-enriched material.

In some embodiments of the invention, the method is provided wherein at least step (v), preferably steps (iii)-(v) are performed in continuous mode. The term continuous is to be interpreted as a method in which the production of the COz-enriched material is performed continuously by contacting the solid feedstock with carbon-rich gas. The continuous process thus continuously outputs COz-enriched material over a given period of time. Preferably, steps (iii) and (iv) are also performed continuously such that an approximately constant bed volume (which is an agitated bed when the screw is rotating) of solid material can be maintained in the reactor throughout continuous operation. This is in contrast to batch processing wherein there is no continuous output of CO₂-enriched material but rather a discrete portion ('batch') is treated by the screw conveyor until the complete batch is fully processed all at once. Even if step (v) is performed in continuous mode, some other steps may still be performed in batch mode. For instance, the solid feedstock of step (i) may be stored in a silo and continuously fed to the screw conveyor as indicated in steps (iii) in a continuous manner, as is preferred. Alternatively, a discrete portion of solid feedstock can be fed to the screw all at once, after which it is submitted to steps (v). In some embodiments of the invention, the method is operated such that CO₂-enriched material is continuously recovered over a period of at least 1 minute, preferably at least 10 minutes, more preferably at least 30 minutes.

In some embodiments of the invention, the solid feedstock provided in step (i) is the CO₂-enriched material obtained in step (v). In other words, a first portion of CO₂-enriched material can be recovered and submitted as part or all of the solid feedstock of step (i) such that multiple passes through the screw conveyor are achieved. Such recycling of the CO₂-enriched material from the screw conveyor outlet to the inlet can be performed multiple times to obtain the desired CO₂-uptake. Due to the small footprint on a factory floor and high product throughput requirements, the present method may also be performed using two or more screw conveyors as described herein in series, wherein the CO₂-enriched material from a first screw conveyor is provided as feedstock for a second screw conveyor placed subsequent to the first conveyor. It will be understood that the conveyors placed in series after the first conveyor do not need to employ an airtight solid feedstock inlet since the feedstock from the first conveyor may be fed directly to the second conveyor together with the (depleted) carbon-rich gas through the same outlet.

The carbon-rich gas of step (ii) of the method described herein may be any gas stream comprising significant amounts of CO₂. It will be understood by the skilled person that the composition of the gas may change as the reaction progresses but that continuous replenishment may be provided throughout step (v). Coupled with a continuous supply of solid feedstock in step (iii), this allows the method to operate in continuous mode. In view of the CO₂ sequestration happening throughout the process, the gas will have a lower CO₂ concentration after step (v) of the method compared to the gas entering step (v) of the method respectively.

In embodiments of the method described herein the carbon-rich gas provided in step (ii) comprises a combustion flue gas, in particular a flue gas from fossil fuel combustion, wood pellet combustion, biomass combustion or municipal waste combustion. Fossil fuel combustion may be coal, petroleum coke, petroleum, natural gas, shale oil, bitumens, tar sand oil, or heavy oils combustion, or any combination thereof. The combustion flue gas may optionally have been treated to reduce the water content, the SO₂ content, and/or the NOx content. In embodiments of the method described herein, the carbon-rich gas provided in step (ii) comprises a cement kiln flue gas. Typically cement kiln flue gas will comprise a fossil fuel combustion flue gas as cement kilns are typically heated by fossil fuel combustion, typically additionally enriched with CO₂ originating from the limestone calcination happening inside the cement kiln for the purpose of cement manufacturing. The cement kiln flue gas may optionally have been treated to reduce the water content, the SO₂ content, and/or the NOx content.

The CO₂ concentration in the carbon-rich gas provided in step (ii) is preferably at least 1 vol%, preferably at least 2 vol%, more preferably at least 3 vol%. Typical CO₂ concentrations for combustion flue gas and cement kiln flue gas are in the range of 1-20 vol%, such as 2-15 vol% or 2-5 vol% or 5-15 vol%, such that it is preferred that the carbon-rich gas provided in step (ii) has a CO₂ concentration in the range of 1-20 vol%, such as 2-15 vol% or 2-5 vol% or 5-15 vol%. In alternative embodiments of the invention, the carbon-rich gas provided in step (ii) comprises at least 80 vol% CO₂, preferably at least 95 vol% CO₂.

In preferred embodiments of the method described herein, step (ii) comprises providing hot combustion flue gas or cement kiln flue gas with a temperature of more than 120 °C, preferably more than 150 °C, preferably more than 190 °C, and cooling the hot flue gas. The cooling can be effected by any cooling means known to the skilled person, including a heat-exchanger (e.g. with ambient air or coolant), passive cooling, and/or jacket cooling. With passive cooling is meant that the piping transporting the flue gas allows for sufficient heat-exchange with ambient air to cool the hot flue gas. In practice, this can be achieved by e.g. increasing piping length, decreasing piping diameter, not insulating the piping etc. Jacket cooling may comprise running a coolant fluid through a jacket placed around the piping transporting the flue gas. The coolant fluid used in the heat-exchanger or the jacket may be any known coolant, including regular water, or a coolant having a freezing point of less than -5 °C, preferably less than -10°C, (typically an aqueous coolant comprising one or more glycols and one or more anticorrosion agents). The cooling is preferably effected by a heat-exchanger and/or jacket cooling. The cooling is preferably performed to a temperature of below 120 °C, preferably below 100 °C, preferably below 90 °C, more preferably below 80 °C, most preferably below 70 °C. After the cooling it may be desirable to perform a further step wherein the cooled flue gas is submitted to a liquid-gas separation step (e.g. using a dehumidifier, demisting pad, or similar equipment) to remove water droplets and/or decrease the moisture content of the cooled flue gas, or to perform a humidification step (depending on the humidity of the flue gas source and the composition of other gases mixed to prepare the carbon-rich gas). In some embodiments of the invention step (ii) comprises providing hot combustion flue gas or cement kiln flue gas with a temperature of more than 120 °C, and cooling the hot flue gas to a temperature of below 100 °C, wherein the cooled flue gas is submitted to a gas-liquid separation step, the liquid being collected and used for wetting the solid feedstock before or during step (v).

The present inventors have found that agglomeration of the solid feedstock is at least partially prevented or reduced by the agitation means protruding from the helical surface of the flighting thereby enhancing the surface area and contact between the solid feedstock and the carbon-rich gas.

As with any chemical process, the appropriate reaction parameters such as residence time, temperature, pressure, etc. during step (v) are highly dependent on the extent of CO₂-sequestration desired and can routinely be determined by sampling material on a regular basis and monitoring reaction progress e.g. via Total Carbon determination as explained herein.

As will be clear from the present description, step (v) is a substantially dry process. While the present inventors have found that moisture control of the solid feedstock provides unique advantages, step (v) is not performed on an aqueous solution or slurry. The present inventors have found that this greatly improves energy efficiency (as no water has to be removed afterwards) and imparts unique properties on the resulting CO₂-enriched material, yielding materials which are substantially different from e.g. aqueous carbonation materials.

In preferred embodiments of step (v), there is an agitated bed of solid material inside the screw conveyor during operation. Due to the rotational movement of the screw, throughout step (v), the solid material moves from an inlet of the screw conveyor to an outlet of the screw conveyor. The skilled person will understand that during normal operation, wherein a screw conveyor is continuously fed with solid feedstock, the agitated bed in the screw conveyor is constantly present, but the individual particles comprised in the bed will move from the inlet to the outlet of each screw conveyor in accordance with their average residence time in the screw conveyor.

In embodiments of the method described herein, in order to stimulate carbon sequestration, step (v) is performed at a temperature of less than 120 °C, preferably less than 100 °C, preferably less than 90 °C, more preferably less than 85 °C. In preferred embodiments of the invention, step (v) is performed at a temperature of at least 30 °C, preferably at least 35 °C, preferably at least 38 °C. In particularly preferred embodiments step (v) is performed at a temperature within the range of 30-85 °C, preferably 30-70 °C, most preferably 40-70 °C, such as 50-60°C. These temperatures allow improved CO₂-enrichment efficiencies to be achieved, in particular in case a slag as described herein is used as a solid feedstock. In preferred embodiments of the invention, no active heating is applied and any increase in temperature is attributed to the temperature of the incoming gas, friction resulting from the agitator or to exothermic reactions taking place during carbon sequestration. The temperature is preferably determined on the solid material during processing. In some embodiments, active cooling is applied during step (v), for example by providing a cooling jacket around the housing of apparatus wherein step (v) is performed. The coolant fluid used in the jacket may be any known coolant, including regular water, or a coolant having a freezing point of less than -5 °C, preferably less than -10°C, (typically an aqueous coolant comprising one or more glycols and one or more anticorrosion agents). In all embodiments of the invention it is preferred that the carbon-rich gas has a temperature within the range of 30-85 °C, preferably 30-70 °C, most preferably 40-70 °C, such as 50-60°C when it is contacted with the solid feedstock in step (v).

The low temperature requirement of the present process means that no fossil fuels are required, and electric heating means (or low caloric value green fuel sources) can realistically be used to supply heat in case the temperature of the gas feed is insufficient to reach the desired temperature. In this way, fossil fuels can be avoided throughout the whole production chain

It is highly preferred that step (v) does not result in significant size reduction. However, the inventors have found that some agglomeration may take place despite the agitation means. In preferred embodiments of the invention, the ratio of the D50 of the solid feedstock provided in step (i) to the D50 of the CO₂-enriched material obtained in step (v) obtained from the screw conveyor is less than 1.2, preferably less than 1.1

In some embodiments of the invention, step (v) comprises contacting the feedstock with a catalyst, preferably a metal oxide catalyst, such as a transition metal oxide catalyst. Examples of suitable catalysts are selected from the group consisting of iron oxides, cobalt oxides, ruthenium oxides, titanium oxides, nickel oxides, aluminium oxides and combinations thereof. The catalyst may be provided as a pure oxide or as a mineral comprising the oxide, for example the aluminium oxides may be provided in the form of a zeolite. The catalyst should be suitable for increasing the CO₂ sequestration of the feedstock. In some embodiments the catalyst is selected from metal oxides for which the ratio TC_{cat}:TC₀ is more than 1.01, preferably more than 1.05 wherein TC_{cat} is the increase the total carbon content of a feedstock when a CO₂ sequestration capacity test is performed, wherein a 10 gram sample of solid feedstock is loaded into a pressure cell with 500 grams of stainless steel balls (diameter 12 mm) coated with the catalyst, followed by pressurization of the cell to 1 MPa, and rotation of the pressurized cell at 5000 RPM for 48 hours, wherein the test is performed at an ambient temperature of 20°C and no heating or cooling is applied, and wherein TC₀ is the increase the total carbon content of a feedstock when a CO₂ sequestration capacity test is performed, wherein a 10 gram sample of solid feedstock is loaded into a pressure cell with 500 grams of uncoated stainless steel balls (diameter 12 mm), followed by pressurization of the cell to 1 MPa, and rotation of the pressurized cell at 5000 RPM for 48 hours, wherein the test is performed at an ambient temperature of 20°C and no heating or cooling is applied.

The catalyst may for example be mixed with the solid feedstock, or immobilized on an inner surface of the screw conveyor. The catalyst may also be immobilized on a porous support or bed which is fixed in the screw conveyor of step (v) in a way that it allows contact with the solid feedstock.

The carbon sequestration methods described herein are preferably performed without employing a strong acid, preferably without employing any further oxidizing agent other than the gas provided in step (ii).

In accordance with preferred embodiments of the invention, the total power consumption represented by step (v) is less than 60 Wh per kg of CO₂-enriched material obtained in step (v), preferably less than 40 Wh, more preferably less than 30 Wh.

In general, step (v) can be performed at atmospheric pressure, below atmospheric pressure or above atmospheric pressure. Hence, in some embodiments step (v) is performed at a pressure of more than about 150 kPa (e.g., at least 151.988 kPa), preferably more than about 300 kPa (e.g., at least 303.975 kPa). In alternative embodiments of the invention step (v) is performed at a pressure below atmospheric pressure, such as a pressure of less than around 100 kPa (e.g. less than 101.325 kPa), such as less than 50 kPa or less than 10 kPa. In any case, the pressure preferably does not exceed 1013 kPa during step (v), preferably the pressure does not exceed 1013 kPa at any point during the method for carbon sequestration described herein. The present inventors have found that such pressures are not required for the present methods, thereby resulting in significant energy savings compared to high-pressure carbonation methods. In all embodiments of the present invention, but in particular those wherein the carbon sequestration step (v) is performed at a pressure below atmospheric pressure (such as a pressure of less than around 100 kPa (e.g. less than 101.325 kPa)), it is preferred that the screw conveyor is such that the % of false air during step (iv) is less than 30%, preferably less than 15%, more preferably less than 5%.

In preferred embodiments, there is an induced flow of the carbon-rich gas through the screw conveyor during step (v). Preferably the induced gas flow of the carbon-rich gas through the screw conveyor is caused by mechanical means, such as a fan or compressor. In preferred embodiments, the induced gas flow of the carbon-rich gas through the screw conveyor is induced by an induction fan placed downstream of the screw conveyor. The present inventors have found that employing a screw comprising gas flow passages as described herein earlier is especially advantageous when low pressures during step (v) are employed as has been described herein earlier, preferably in combination with an induced flow since this still allows sufficient carbon sequestration to occur without requiring high energy consumption caused by intensive agitation or high pressures. The induced gas flow may be concurrent with or countercurrent to the flow of solid material. Preferably, the induced gas flow is concurrent with the flow of solid material.

In preferred embodiments, the screw conveyor is rotated at a speed which produces an agitated feedstock bed reaching a height which is at least 15% higher, preferably at least 25% higher than the height of the feedstock bed when there is no rotation, the height of the bed being determined approximately in the centre of the surface of the powder bed and wherein the height of the bed when there is no rotation and the height of the agitated feedstock bed are determined on the same quantity of feedstock loaded in the screw conveyor. Step (v) preferably comprises rotation of the screw conveyor at no more than 350 rpm, preferably no more than 300 rpm. Step (v) preferably comprises rotation of the screw conveyor is preferably configured to rotate the screw at a tip speed within the range of 0.1-0.3 m/s, preferably within the range of 0.4-0.2 m/s.

In some embodiments, step (i) and/or step (v) comprises wetting the solid feedstock. Wetting the solid feedstock may be performed by any means known to the skilled person. Preferably, spraying an aqueous composition, such as water, on the solid feedstock; and/or contacting the solid feedstock with a humid gas such that it can increase the moisture content of the solid feedstock when it is contacted therewith. The present inventors have found that such surface wetting is advantageous for the CO₂ sequestration efficiency. However, even if the solid feedstock is wetted by spraying, if dry gas is used for step (v), the solid feedstock may dry out quickly, such that additional moisture control steps are necessary to maintain the moisture content of the solid phase during step (v). To reduce or eliminate the need for such additional moisture control steps, it is preferred that the humidity of the carbon-rich gas provided in step (ii) is controlled such that moisture content of the solid material during step (v) remains at or above the moisture content of the solid feedstock at the start of step (v). In all of the embodiments described herein, it is preferred that the carbon-rich gas has a relative humidity (RH) of at least 70%, preferably at least 85 %, more preferably at least 95 %, such as about 100 %. As will be clear from the above, it is preferred that the solid feedstock is maintained at a moisture content equal to or higher than the moisture content at the start of step (v), throughout step (v). For the purposes of the present disclosure, to maintain at a target moisture content includes such situations where the solid feedstock deviates from the target moisture content, such deviation is detected or calculated, and corrected. In general, maintaining a certain moisture content throughout a method step should be interpreted to mean that the moisture content is within the desired range during at least 50% of the duration of the step, preferably at least 80% of the duration of the step, in particular throughout the complete duration of the step.

The moisture content of the solid feedstock is expressed in wt.% and determined by total weight of the solid feedstock. The moisture content of the solid feedstock provided in step (i) is preferably more than 2 wt.%, preferably more than 5 wt.%, more preferably more than 10 wt.%. The present inventors have surprisingly found that the moisture content of the solid feedstock is preferably less than 35 wt.%, preferably less than 27 wt.%, most preferably less than 20 wt.%, since above these levels reduced efficiencies are observed. Depending on the feedstock, above this moisture content, a tendency to convert to a slurry may also be observed. The solid feedstock preferably has the moisture content specified herein at at least one point in time during step (v), for example when step (v) is initiated. In some embodiments, the moisture content of the feedstock is as specified herein throughout a majority or substantially all of step (v).

The method described herein preferably comprises a further step: (vi) deagglomerating the CO₂-enriched material obtained in step (v), optionally after one or more further CO₂-enrichment steps wherein the solid material is contacted with a carbon-rich gas comprising at least 0.5 vol% CO₂. The preferred embodiments described herein relating to the gas composition, temperature, pressure, duration, etc. of step (v) are also applicable to the optional one or more further CO₂-enrichment steps. Step (vi) may be performed using the same apparatus as used in step (v). However it is preferred that step (vi) is performed using an apparatus distinct from the apparatus used in step (v) since, as is explained herein earlier, the apparatus of step (v) preferably does not effect significant size-reduction. In preferred embodiments of the invention, the ratio of the D50 of the solid feedstock provided in step (i) to the D50 of the deagglomerated CO₂-enriched material obtained in step (vi), is within the range of 0.8-1.5, preferably within the range of 0.8-1.2, most preferably within the range of 0.9-1.2.

The method of the present invention preferably comprises a further step (vii) of drying the CO₂-enriched material recovered in step (v), optionally after one or more further CO₂-enrichment steps wherein the solid material is contact with a carbon-rich gas comprising at least 0.5 vol% CO₂, or of drying the deagglomerated material obtained in step (vi). The preferred embodiments described herein relating to the gas composition, temperature, pressure, duration, etc. of step (v) are also applicable to the optional one or more further CO₂-enrichment steps. This avoids agglomeration/lumping of the material upon long-term storage. The deagglomeration of step (vi) may be performed before, during or after the drying of step (vii). Drying may be performed by any means known to the skilled person. Drying preferably comprises drying the CO₂-enriched material recovered in step (v) or step (vi) to a moisture content of less than 8 wt.% (by total weight of the dried CO₂-enriched material), preferably less than 5 wt.% (by total weight of the dried CO₂-enriched material), more preferably less than 2 wt.% (by total weight of the dried CO₂-enriched material). Drying is preferably performed by contacting the COz-enriched material with a drying gas stream (preferably a continuous flow of a drying gas stream) having a temperature of less than 400 °C, preferably less than 300 °C, preferably less than 250 °C and preferably having a relative humidity (RH) of less than 50%, preferably less than 30%, most preferably less than 10%. By keeping the temperature of the drying gas below the values mentioned above, loss of the sequestered CO₂ from the CO₂-enriched material is avoided. The drying may be performed inside the same apparatus as step (v) or in a distinct apparatus. For example, the drying may be performed inside the same apparatus as step (v) by changing the humidity of the gas stream after completion of the CO₂-enrichment of step (v) which is especially advantageous if the method is not operated in continuous mode. For example, the drying may be performed inside the same apparatus as step (v), by introducing a drying gas stream having a reduced humidity and/or an increased temperature at a point inside the reactor between the solids feedstock inlet and the solid material outlet, which is especially advantageous if the method is operated in continuous mode.

### Properties of the solid feedstock and of the obtained CO₂-enriched material

The method of the present invention is not particularly limited with regard to the feedstock used. In order to achieve significant carbon sequestration, it is preferred that the solid feedstock provided in step (i) is a material which exhibits an increase in CO₂ content of at least 1%, preferably of at least 4% when submitted to a CO₂ sequestration capacity test wherein a 10 gram sample of solid feedstock is loaded into a pressure cell with 500 grams of stainless steel balls (diameter 12 mm) coated with titanium dioxide, followed by pressurization of the cell to 1 MPa, and rotation of the pressurized cell at 5000 RPM for 48 hours, wherein the test is performed at an ambient temperature of 20°C and no heating or cooling is applied, wherein the CO₂ content is determined as mass loss above 400°C measured by TGA employing a temperature trajectory wherein the temperature was increased from room temperature to 800°C at a rate of 10 °C/min and then decreased to room temperature at a rate of 10 °C/min or that the solid feedstock provided in step (i) is a material which exhibits an increase in total carbon content of at least 1%, preferably of at least 4% when submitted to a CO₂ sequestration capacity test wherein a 10 gram sample of solid feedstock is loaded into a pressure cell with 500 grams of stainless steel balls (diameter 12 mm) coated with titanium dioxide, followed by pressurization of the cell to 1 MPa, and rotation of the pressurized cell at 5000 RPM for 48 hours, wherein the test is performed at an ambient temperature of 20°C and no heating or cooling is applied.

In preferred embodiments of the invention, the solid feedstock provided in step (i) comprises a mineral and/or elemental carbon. In some preferred embodiments, the feedstock comprises a carbonatable material preferably the feedstock comprises at least 0.1 wt.% (by total weight of the feedstock) carbonatable material, preferably at least 0.5 wt.% (by total weight of the feedstock) carbonatable material, most preferably at least 2 wt.% (by total weight of the feedstock) carbonatable material. The carbonatable material is preferably selected from calcium oxides, calcium hydroxides, magnesium oxides, magnesium hydroxides, calcium silicates, magnesium silicates, and combinations thereof.

In some embodiments the solid feedstock provided in step (i) comprises one or more of coal combustion products (in particular fly ash or bottom ash), graphene, graphite, clay, shale, silicate minerals, glass (in particular soda-lime glass or borosilicate glass), iron or steel-making slags, wood, limestone, calcite, amosite, brucite, natural pozzolan, volcanic rock, biochar, pyroxenes, hydrous magnesium silicates, talc, serpentines, serpentinite, peridotite, olivine, borosilicate glass, volcanic ash, perlite, pumice, obsidian, scoria, tuffs (e.g. rhyolite tuffs, dacite tuffs, basaltic tuffs, trachytic tuffs, phonolitic tuffs, digenetic lithoid tuffs), andesite, clinoptiololite, heulandite, augite, apatite, titanite, biotite, hauynite, nosean, sodalite, magnetite, muscovite, chabazite, analcite, hematite, cristobalite, tripoli, kaolinite, illite, mica, hornblende, mordenite, andesites, basalt, diatomite, tripoli, cherts, dolomite, forsterite, monticellite, wollastonite, diopside, enstatite, lizardite, potassium and sodium feldspars, antigorite, chrysotile, opaline shales, hydraulic cement, slaked lime, concrete, mafic or ultramafic mining tailings and zeolites, preferably selected from serpentinite, peridotite, basalt, volcanic rock, perlite, zeolites, soda-lime glass, bottom ash, coal fly ash, oil fly ash, coal fly ash, subbituminous coal fly ash, anthracite coal fly ash, bituminous coal fly ash, blast furnace (BF) slag (such as air-cooled blast furnace (ACBF) slag or water cooled blast furnace slag), granulating blast furnace (GBF) slag, basic oxygen furnace (BOF) slag, ladle furnace basic slag (LS), electric arc furnace (EAF) flag, and mafic or ultramafic mining tails. The furnace slags may be from ferrous metal production, non-ferrous metal production or phosphorous production, preferably from ferrous metal production. Most preferred are the slag feedstocks recited herein. In preferred embodiments of the present invention, the feedstock is not pre-treated with acid.

In preferred embodiments of the invention, the method described herein is provided wherein the solid feedstock provided in step (i), has one, two, three or four, preferably four of the following characteristics:
a D10 within the range of 0.005 to 3 µm;
a D50 within the range of 0.1 to 100 µm, preferably within the range of 0.1 to 40 µm, more preferably within the range of 1-40 µm, most preferably within the range of 5-40 µm;
a D90 within the range of 0.5 to 300 µm;
a BET surface area within the range of 0.1 to 10000 m²/g, preferably within the range of 0.5-2000 m²/g.

In all embodiments of the present invention it is preferred that the D90 of the solid feedstock provided in step (i) is as specified above, since this is the most important size characteristic influencing overall performance.

Since the CO₂-enrichment treatment of step (v) preferably takes place without significant size reduction (maintaining an agitated bed without significant size reduction, as explained herein before), the CO₂-enriched material recovered in step (v) or step (vi) preferably complies with the same particle size and surface area characteristics. In other words, the COz-enriched material recovered in step (v) or step (vi) preferably has one, two, three or four, preferably four of the following characteristics:
a D10 within the range of 0.005 to 3 µm;
a D50 within the range of 0.1 to 100 µm, preferably within the range of 0.1 to 40 µm, more preferably within the range of 1-40 µm, most preferably within the range of 5-40 µm;
a D90 within the range of 0.5 to 300 µm;
a BET surface area within the range of 0.1 to 10000 m²/g, preferably within the range of 0.5-2000 m²/g.

Without wishing to be bound by any theory, the present inventors believe that the sequestration methods of the invention when applied to materials such as graphite, allow platelet-like morphology to be maintained. This is observed by platelet thickness being maintained. Hence, in embodiments of the invention (in particular those embodiments where the feedstock of step (i) comprises or is graphite), the COz-enriched material recovered in step (v) or step (vi) has a platelet morphology and has a platelet thickness of more than 10 nm, preferably more than 20 nm, more preferably more than 50 nm. The platelet thickness as referred to herein is preferably determined by calculating the average platelet thickness determined by Transmission Electron Microscopy on all particles for which the platelet thickness can be determined in a random field of view of 25x25 micron recorded from a random sample of a homogenized batch of material.

The method of the invention is preferably performed such that the ratio of the CO₂ content of the CO₂-enriched material recovered in step (v) or step (vi) to the CO₂ content of the solid feedstock of step (i) is at least 1.2:1, preferably at least 1.5:1, preferably at least 3:1, more preferably at least 10:1, wherein the CO₂ content is determined as mass loss above 400°C measured by TGA employing a temperature trajectory wherein the temperature was increased from room temperature to 800°C at a rate of 10 °C/min and then decreased to room temperature at a rate of 10 °C/min. Similarly, the method of the invention, in particular in case the feedstock is selected from non-carbonaceous materials such as the minerals, slags and glass described herein earlier, is preferably performed such that the ratio of the total carbon content of the second CO₂-enriched material recovered in step (v) or step (vi) to the total carbon content of the solid feedstock of step (i) is at least 1.05:1, preferably at least 1.1:1, more preferably at least 1.2:1.

### List of reference signs

- 1.: Housing
- 2.: Drive Unit
- 3.: Motor
- 4.: Outlet

- 10.: Screw
- 11.: Housing
- 12.: Gas Inlet
- 13.: Material Inlet
- 14.: Material Outlet

- 100.: Screw Shaft
- 101.: Helical Flighting
- 102.: Opening in the Flighting
- 103.: Agitation Element

- 1000.: Screw conveyor

- A.: Longitudinal axis
- H.: Triple Helix
- R.: Radial direction

## Claims

1. A screw conveyor for conveying feedstock, comprising a hollow housing and a screw positioned within said housing, wherein the screw is supported for rotational movement around a longitudinal axis, wherein the screw comprises a helical flighting, **characterised in that** the screw comprises agitation means protruding from the helical surface of the flighting and one or more gas flow passages radially positioned between the longitudinal axis and the outer radius of the screw.

2. The screw conveyor of claim 1 or 2 wherein the agitation means comprise cut and folded flights.

3. The screw conveyor of any one of the previous claims wherein the agitation means comprises one or more lifting bars connecting two adjacent blades of the helical flighting.

4. The screw conveyor of claim 3 wherein two adjacent blades of the helical flighting are connected to each other by two or more lifting bars.

5. The screw conveyor of claim 3 or 4 wherein at least one, preferably a majority, of the blades are connected to two adjacent blades by one or more lifting bars.

6. Screw conveyor according to any one of claims 3-5 wherein one or more continuous helixes are formed by a plurality of lifting bars extending between the blades of the helical flighting.

7. The screw conveyor of any one of the preceding claims, wherein the helical flighting is attached to the outer surface of a screw shaft extending along the helical flighting, and wherein the one or more gas flow passages are formed by one or more openings extending through a blade of the helical flighting.

8. The screw conveyor of claim 7 wherein a majority of the blades of the helical flighting comprise one or more openings extending through the blade, preferably wherein each of the blades of the helical flighting comprises one or more openings extending through the blade.

9. The screw conveyor of claim 7 or 8 wherein at least 10% of the surface area of the helical flighting forms a gas flow passage, preferably at least 20% of the surface area of the helical flighting forms a gas flow passage.

10. Screw conveyor according to any one of the preceding claims, wherein the agitation means are positioned at a radial distance of at least 50%, preferably at least 60%, more preferably at least 65% of the outer radius of the screw from the longitudinal axis.

11. Screw conveyor according to any one of the preceding claims, wherein the one or more gas flow passages are radially positioned between the longitudinal axis and the agitation means.

12. Screw conveyor according to any one of the preceding claims, the screw conveyor is a horizontal screw conveyor.

13. Screw conveyor according to any one of the previous claims further comprising:
- a solid feedstock inlet for the introduction of solid feedstock to be conveyed into said housing;
- a solid material outlet for the discharge of conveyed material from the housing; and
- a gas inlet.

14. A method for the preparation of CO₂-enriched material comprising the steps of:
i) providing a solid feedstock;
ii) providing a carbon-rich gas comprising at least 0.5 vol% CO₂;
iii) feeding the solid feedstock to the screw conveyor according to any one of claims 1-13;
iv) feeding the carbon-rich gas to the screw conveyor;
v) contacting the solid feedstock with the carbon-rich gas in the screw conveyor comprising rotating the screw, thereby obtaining CO₂-enriched material.

15. Use of a screw conveyor according to any one of claims 1-13
• for the CO₂-enrichment of a solid feedstock; or
• for carbon sequestration; or
• for the removal of CO₂ from a carbon-rich gas, such as a flue gas.
